# EUROPÄISCHE PATENTANMELDUNG

(11) **EP 1 464 552 A1**
(43) Veröffentlichungstag der Anmeldung: **06.10.2004**
(21) Anmeldenummer: 04007932.9
(22) Anmeldetag: 01.04.2004
(51) Int. Cl.: B60R 21/34

(54) **Kraftfahrzeug mit anhebbarer Frontklappe**

(30) Priorität: 05.04.2003 DE 10315588
(71) Anmelder: ADAM OPEL AG, 65423 Rüsselsheim (DE)
(72) Erfinder: Ranker, Norbert, 66901 Schönenberg-Kübelberg (DE); Renneisen, Ingo, 65239 Hochheim (DE); Schäfer, Joachim, 64297 Darmstadt (DE)

(57) **Zusammenfassung**

Bei einem Kraftfahrzeug mit einer Frontklappe (1), wenigstens einem ersten Aktuator (7), zum Anheben der Frontklappe (1) bei einem Unfall, einem Scharnier (2), das die Frontklappe (1) mit der Karosserie (3) des Fahrzeugs verbindet, einem oder mehreren im Bereich der Frontklappe (1) wirksamen Airbags und einem Gasgenerator zum Versorgen wenigstens eines dieser Airbags (26) ist ein zweiter Aktuator (8) zum Lösen der über das Scharnier (2) verlaufenden Verbindung zwischen der Frontklappe (1) und der Karosserie (3) an den Gasgenerator angeschlossen.

## Beschreibung

Die vorliegende Erfindung betrifft ein Kraftfahrzeug mit einer Frontklappe, die im Falle eines Unfalls automatisch anhebbar ist.

Wenn bei einem Unfall ein Fußgänger von vorn angefahren wird, so schlägt dieser auf die Frontklappe des Fahrzeugs auf. Um den Fußgänger dabei vor schweren Verletzungen schützen zu können, ist es wünschenswert, ihn durch eine Verformung der Frontklappe beim Aufschlag möglichst allmählich abzubremsen. Dazu muss die Tiefe, über die die Frontklappe verformbar ist, möglichst groß sein. Bei modernen Kraftfahrzeugen ist die Frontklappe zumeist die Motorhaube, und der Abstand zwischen ihr und dem Motor beträgt nur wenige Zentimeter. Diese Entfernung ist für einen wirksamen Schutz des Fußgängers völlig unzureichend. Um demnächst in Kraft tretende erhöhte gesetzliche Anforderungen hinsichtlich des Schutzes von Fußgängern zu erfüllen, sind Vorrichtungen zum automatischen Anheben der Frontklappe bei einem Unfall entwickelt worden, die den Abstand zwischen der Frontklappe und einem darunter befindlichen Motor und damit den dem Fußgänger zur Verfügung stehenden Verformungsweg zu vergrößern. Beispiele solcher Verrichtungen sind in DE 197 10 417 A1 und DE 197 12 961 A1 beschrieben.

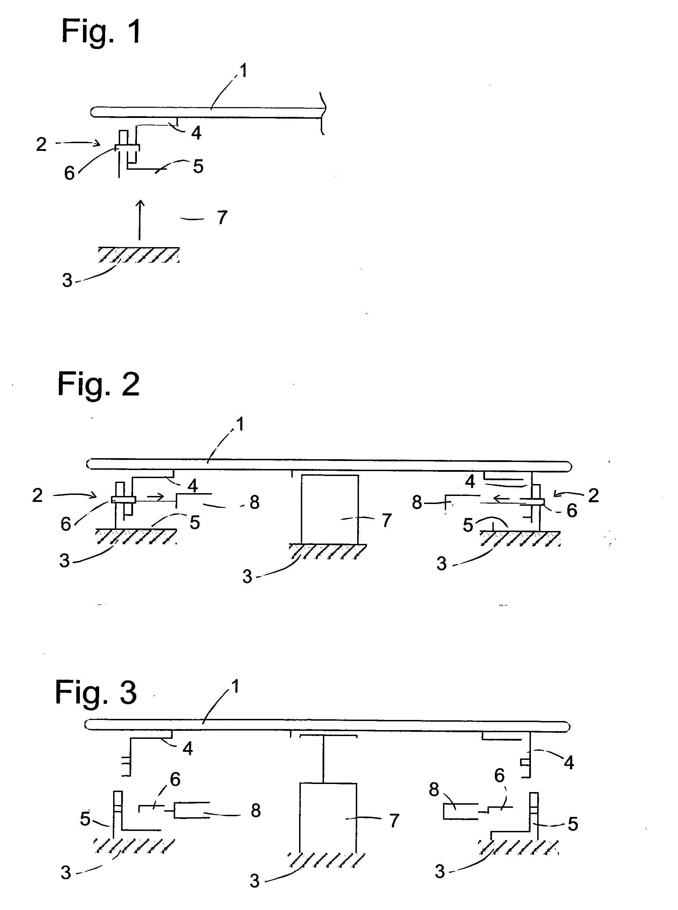

Ein Problem derartiger Konstruktionen ist, dass die Frontklappe normalerweise an einem Rand, meist ihrem hinteren Rand, schwenkbar an die Fahrzeugkarosserie angelenkt ist. Um die Frontklappe im Bereich eines solchen Gelenks anzuheben, müssen hierfür vorgesehene Aktuatoren mit dem Gelenk "in Reihe" montiert sein, d.h. sie bilden entweder die Verbindung zwischen einem beweglichen Teil des Gelenks und der Frontklappe, so dass sie bei einem Unfall die Klappe anheben, ohne dass sich dabei die Gelenkachse verlagert, oder sie bilden die Verbindung zwischen einem normalerweise in Bezug auf die Karosserie festen Teil des Gelenks und der Karosserie, so dass sie bei einem Unfall die Frontklappe mitsamt dem Gelenk anheben. In beiden Fällen erreicht die Anordnung von Aktuatoren und Gelenkteilen eine Bauhöhe, die am Fahrzeug nicht einfach unterzubringen ist. Fig. 1 zeigt schematisch einen solchen Aufbau in einem Schnitt entlang der Schwenkachse der Frontklappe 1. Ein Scharnier 2, welches die Frontklappe 1 mit der Karosserie 3 verbindet, besteht aus zwei zueinander symmetrischen Teilen, die jeweils in der Nähe der seitlichen Ränder der Frontklappe 1 positioniert sind und von denen nur einer in Fig. 1 gezeigt ist. Jeder Teil umfasst eine fest mit der Frontklappe 1 verbundene, zur Schwenkachse des Scharniers 2 senkrechte Lasche 4.

Aus DE-OS 27 11 338 ist ein Kraftfahrzeug mit Mitteln zum Dämpfen des Aufpralls eines Fußgängers bekannt, bei dem ein in einem Kanal unterhalb des hinteren Randes der Frontklappe des Fahrzeuges angebrachter Airbag, wenn er mit Gas gefüllt wird, die Frontklappe anhebt. Diese bekannte Konstruktion ist insbesondere deshalb attraktiv, weil der Airbag den Fußgänger vor gefährlichen Kontakten mit den Scheibenwischerwellen oder den A-Säulen des Fahrzeugs zu schützen vermag. Sie ist jedoch nicht anwendbar auf ein Kraftfahrzeug, bei dem die Frontklappe mit der Karosserie durch ein Scharnier verbunden ist. Es ist keine Stellung erkennbar, in der bei dieser bekannten Frontklappe ein Scharnier angebracht werden könnte, ohne dass dessen Schwenkbewegung durch ein gemäß dieser Schrift zwischen der Frontklappe und der Karosserie vorgesehenes Paar von Hebeln behindert würde. Ein weiteres Problem dieser Konstruktion ist, dass es nicht ausgeschlossen ist, dass bei einem Unfall der Airbag sich aufbläht, um die Frontscheibe des Fahrzeugs abzudecken, ohne dabei gleichzeitig den hinteren Bereich der Frontklappe anzuheben.

Aufgabe der vorliegenden Erfindung ist, ein Kraftfahrzeug mit einer bei einem Unfall anhebbaren Frontklappe anzugeben, das einen hochwirksamen Verletzungsschutz für Fußgänger bildet, bei dem ein Aktuator zum Anheben der Frontklappe einfach und platzsparend montierbar ist und das ein Anheben auch in dem Bereich der Frontklappe ermöglicht, der über ein Scharnier mit der Karosserie verbunden ist.

Die Aufgabe wird gelöst durch ein Kraftfahrzeug mit den Merkmalen des Anspruchs 1. Indem der Gasgenerator nicht nur zum Füllen des Airbags, sondern gleichzeitig auch zum Lösen der über das Scharnier verlaufenden Verbindung zwischen der Frontklappe und der Karosserie eingesetzt wird, wird die Freiheit bei der Konstruktion der Frontklappenaufhängung beträchtlich vermehrt, da der die Frontklappe anhebende erste Aktuator an weitgehend beliebiger Stelle des anzuhebenden Randes der Frontklappe, auch beabstandet vom Angriffspunkt des Scharniers, angreifen kann, und die Notwendigkeit entfällt, den ersten Aktuator in Reihe mit dem Scharnier zu montieren.

Einer ersten Ausgestaltung der Erfindung zufolge ist die durch den zweiten Aktuator lösbare Verbindung eine Verbindung zwischen zwei gegeneinander schwenkbaren Teilen des Scharniers. Durch Lösen einer solchen Verbindung zerfällt das Scharnier in zwei Teile, so dass der erste Aktuator die Frontklappe anheben kann, ohne einen nennenswerten Widerstand überwinden zu müssen.

Eine solche Verbindung kann insbesondere durch ein Gelenk des Scharniers gebildet sein, mit der der zweite Aktuator verbunden ist.

Das gleiche Ziel wird einer zweiten Ausgestaltung zufolge dadurch erreicht, dass die durch den zweiten Aktuator lösbare Verbindung eine Verbindung zwischen dem Scharnier und der Karosserie oder zwischen dem Scharnier und der Frontklappe ist. Vorzugsweise ist ein solches Scharnier an wenigstens zwei Punkten mit der Karosserie oder der Frontkappe verbunden, und der zweite Aktuator ist ausgelegt, eine der zwei Verbindungen zu lösen. So wird zwar durch das Lösen der Verbindung die Frontklappe in einem gewissen Umfang frei beweglich gemacht; da aber die zweite Verbindung bestehen bleibt, kann sich die Frontklappe nicht unkontrolliert von der Karosserie entfernen.

Eine besonders einfache Konstruktion ergibt sich, wenn der zum Anheben der Frontklappe vorgesehene erste Aktuator mit einem der Airbags identisch ist.

Der zweite Aktuator umfasst vorzugsweise einen in einer Gasleitung zwischen dem Gasgenerator und dem wenigstens einen von dem Gasgenerator versorgten Airbag angeordneten Zylinder mit einem Kolben, der mit der Verbindung des Scharniers direkt verbunden ist, um diese ggf. zu lösen, und der durch das Gas des Gasgenerators aus einer Ruhestellung, in der er die Gasleitung zum Airbag versperrt und die Verbindung besteht, in eine aktive Stellung verdrängbar ist, in der er die Gasleitung freigibt und die Verbindung gelöst ist. Durch diese Konstruktion ist sichergestellt, dass die Verbindung bereits durch das erste vom Gasgenerator erzeugte Gas gelöst wird. Wenn dies nicht der Fall wäre, könnte es dazu kommen, dass die Frontklappe das Aufblasen des Airbags behindert, so dass dieser nicht wirksam werden kann, und andererseits der vom mit Gas beaufschlagten Airbag auf die Frontklappe ausgeübte Druck ein Lösen der Verbindung behindert.

An einer vom Gaseinlass abgewandten Seite des Zylinders ist vorzugsweise eine Druckausgleichsöffnung vorhanden, so dass, wenn vom Gasgenerator an eine Vorderseite des Kolbens strömendes Gas diesen in die aktive Stellung drängt, Luft aus einer durch die Rückseite des Kolbens begrenzten Kammer ungehindert ins Freie entweichen kann.

Wenigstens einer der Airbags sollte im aktivierten Zustand eine Frontscheibe und/oder A-Säulen des Kraftfahrzeugs überdecken, um einen Aufprall des Fußgängers auf Stellen der Karosserie, die eine besonders hohe Verletzungsgefahr beinhalten, wie eben die festen, unnachgiebigen A-Säuien oder die am unteren Rand der Frontscheibe vorspringenden Scheibenwischerwellen, abzupolstern.

Dieser wenigstens eine Airbag ist im nicht aktivierten Zustand vorzugsweise von einer nach oben offenen Schale aufgenommen. Diese erstreckt sich vorzugsweise entlang des hinteren Randes der Frontklappe, so dass der Airbag, wenn er mit Gas beaufschlagt wird, diesen hinteren Rand wirksam anheben kann.

Diese Schale kann in einfacher Weise als ein U-Profil ausgebildet sein, das zusätzlich eine tragende bzw. stabilisierende Funktion in der Statik der Fahrzeugkarosserie haben kann.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen schematischen Schnitt durch ein Scharnier mit in herkömmlicher Weise montiertem Aktuator;
- Fig. 2: einen schematischen Schnitt durch eine Frontklappe eines Kraftfahrzeugs und deren Scharniere gemäß der Erfindung in verbundenem Zustand;
- Fig. 3: die Frontklappe und das Scharnier der Fig. 2 in unverbundenem Zustand;
- Fig. 4: einen schematischen Schnitt durch einen Aktuator zum Lösen der Verbindung des Scharniers;
- Fig. 5: einen Schnitt quer zur Schwenkachse durch ein Scharnier gemäß der Erfindung in unterschiedlichen Stellungen;
- Fig. 6: eine perspektivische Teilansicht einer Fahrzeugkarosserie mit zwei am Fuß der Frontscheibe unterhalb der Frontklappe montierten Airbags; und
- Fig. 7: die gleiche Frontpartie mit aktivierten Airbags.

Fig. 2 zeigt einen schematischen Schnitt durch eine Frontklappe 1 eines Kraftfahrzeugs und das Scharnier 2, welches die Frontklappe 1 mit der Karosserie 3 verbindet.

Das Scharnier 2 besteht aus zwei zueinander symmetrischen Teilen, die wie in Fig. 1 jeweils in der Nähe der seitlichen Ränder der Frontklappe 1 positioniert sind. Jeder Teil umfasst eine fest mit der Frontklappe 1 verbundene, zur Schwenkachse des Scharniers 2 senkrechte Lasche 4 und eine in gleicher Weise mit der Karosserie 3 verbundene Lasche 5. In fluchtende Bohrungen der vier Laschen sind Stifte 6 eingesteckt, die ein Gelenk und/oder die Schwenkachse des Scharniers 2 definieren. Ein erster Aktuator 7 ist mittig zwischen den zwei Teilen des Scharniers 2 angeordnet und stützt sich einerseits direkt an der Karosserie 3 und andererseits an der Frontklappe 1 ab. Zwei zweite Aktuatoren 8 sind mit den Stiften 6 direkt verbunden, um diese aus den Bohrungen der Laschen herauszuziehen, unmittelbar bevor der erste Aktuator 7 bei einem Unfall beginnt, die Frontklappe 1 anzuheben. Fig. 3 zeigt den angehobenen Zustand der Frontklappe 1, in dem die Stifte 6 aus den Laschen 4, 5 ausgerückt und die Laschen 4 jeweils von den Laschen 5 getrennt sind.

Durch die Möglichkeit, die Scharnierverbindung zwischen Frontklappe 1 und Karosserie 3 zu lösen, entfällt die Notwendigkeit, den ersten Aktuator 7 jeweils in Reihe mit einem Scharnierteil zu montieren. Dadurch reduziert sich die zum Unterbringen des ersten Aktuators 7 und des Scharniers erforderliche freie Einbauhöhe zwischen der Frontklappe 1 und der Karosserie 3, was die Unterbringung des Aktuators 7 vereinfacht. Außerdem genügt ein einziger Aktuator 7, um die Frontklappe 1 an der Achse des Scharniers 2 auf ihrer gesamten Breite anzuheben.

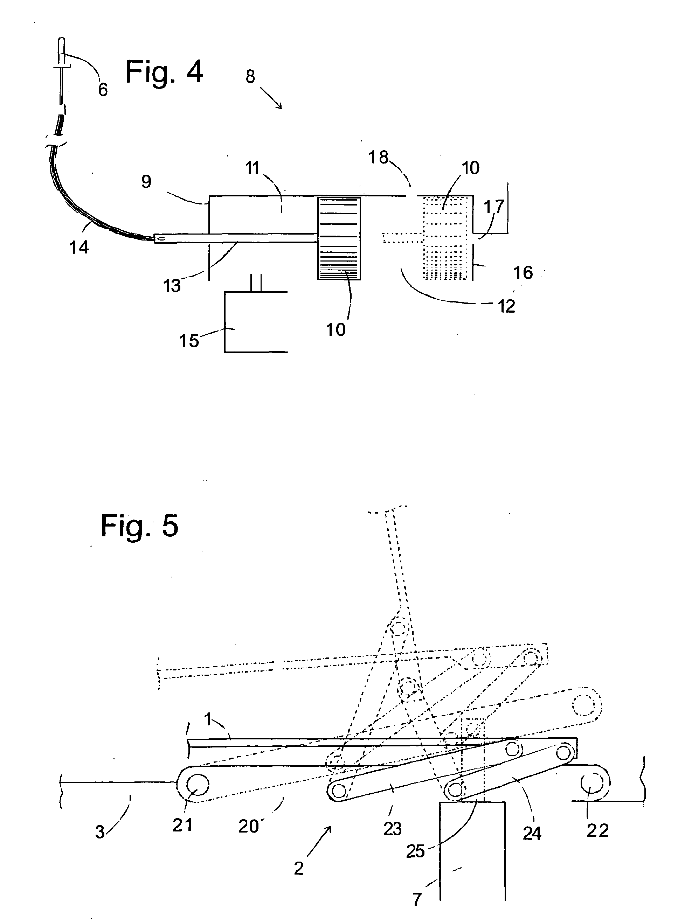

Fig. 4 zeigt einen schematischen Schnitt durch einen zum Lösen der Scharnierverbindung einsetzbaren zweiten Aktuator 8. Der zweite Aktuator 8 umfasst einen Zylinder 9, in welchem ein Kolben 10 verschiebbar ist, der den Zylinder 9 in zwei Kammern 11, 12 unterteilt. Eine mit dem Kolben 10 verbundene Kolbenstange 13 ist durch eine Stirnwand des Zylinders 9 herausgeführt und an einem Ende eines Seils 14 eines Seilzugmechanismus, z.B. eines an sich bekannten Bowdenzuges, befestigt. Das andere Ende des Seils 14 ist mit einem der Stifte 6 verbunden.

Ein Gasgenerator 15 ist an die Kammer 11 des Zylinders 9 angeschlossen und versorgt diese mit Gas, wenn er bei einem Unfall gezündet wird. Das Gas treibt den Kolben 10 aus seiner Fig. 4 mit durchgezogenen Linien dargestellten Ruhestellung in eine gestrichelt dargestellte aktive Stellung, in der der Kolben 10 an der Stirnwand 16 des Zylinders 9 im Anschlag ist und das Volumen der Kammer 12 praktisch verschwindet. Luft, die sich im Ruhezustand des Kolbens in der Kammer 12 befindet, wird durch eine Druckausgleichsöffnung 17 in der Stirnwand 16 ausgetrieben.

Während sich der Kolben 10 von der Ruhestellung in die aktive Stellung bewegt, wird über das Seil 14 oder in einer alternativen Ausführungsform direkt der Stift 6 aus seinem Gelenk herausgezogen, und die jeweils mit der Karosserie 3 bzw. der Frontklappe 1 verbundenen Elemente 4, 5 des Scharniers werden voneinander getrennt. Die Länge des Kolbenhubs 14 ist so bemessen, dass diese Trennung vollzogen ist, bevor der Kolben 10 auf seinem Weg in die aktive Stellung einen Ausgangsanschluss 18 freigibt, über den dann der erste Aktuator 7 mit dem Gas des Gasgenerators 15 versorgt wird. So ist durch die Anordnung des zweiten Aktuators 8 in der vom Gasgenerator 15 zum ersten Aktuator 7 führenden Versorgungsleitung und die Konstruktion des zweiten Aktuators 8 sichergestellt, dass der erste Aktuator 7 erst dann beginnt, Druck auf die Frontklappe 1 auszuüben, um diese anzuheben, wenn die Stifte 6 aus dem Scharnier 2 herausgezogen sind.

Fig. 5 zeigt ein konkretisiertes Ausführungsbeispiel eines zwischen Frontklappe 1 und Karosserie 3 angeordneten Scharniers 2 gemäß der vorliegenden Erfindung in einer Seitenansicht senkrecht zur Schwenkachse des Scharniers. Die Karosserie 3 ist schematisch durch einen horizontalen Träger dargestellt, an dem eine Leiste 20 an zwei Punkten durch Stifte 21, 22 befestigt ist, die durch Bohrungen des Trägers und der Leiste geführt sind. An der Leiste 20 sind zwei Gelenkarme 23, 24 schwenkbar angebracht. Die Gelenkarme sind ferner schwenkbar mit einem hinteren Randbereich der Frontklappe 1 verbunden. Die Gelenkarme 23, 24 unterstützen eine Schwenkbewegung der Frontklappe 1 aus einer geschlossenen Stellung, mit durchgezogenen Linien dargestellt, in eine geöffnete Stellung, als gestrichelter Umriss dargestellt, bei der gleichzeitig mit der Schwenkbewegung der Frontklappe 1 deren rückwärtiger Rand angehoben wird.

Wenn bei einem Unfall durch Einwirkung des zweiten Aktuators 8 der Stift 22 aus den Bohrungen der Leiste 20 und des Trägers 3 herausgezogen wird, wird die Leiste 20 um den verbliebenen Stift 21 schwenkbar.

Der erste Aktuator 7 hat ein an der Karosserie befestigtes Gehäuse und einen in dem Gehäuse mit Hilfe einer Treibladung verschiebbaren, nicht dargestellten Kolben, von dem eine Kolbenstange 25 an die Leiste 20 angelenkt ist. Wenn bei einem Unfall die Treibladung gezündet wird, schwenkt die Kolbenstange 25 die Leiste 20 in die in Fig. 5 als strichpunktierter Umriss gezeigte Stellung. Da die Frontklappe 1 an ihrem (in der Fig. nicht gezeigten) vorderen Rand durch die Fahrzeugkarosserie gestützt ist, kann sie nicht um den Stift 21 schwenken, sondern allenfalls um eine Achse in der Nähe ihres vorderen Randes. Dies zwingt die Gelenkarme 23, 24 dazu, relativ zur Leiste 20 zu schwenken, woraus eine Gesamtanhebung der Frontklappe 1 resultiert, die größer ist als der Hub der Kolbenstange 25, wie an dem strichpunktierten Umriss der Frontklappe 1 zu erkennen.

Da bei dieser Ausgestaltung des Scharniers der Zusammenhalt zwischen Frontklappe 1 und Karosserie 3 im Bereich des Scharniers 2 nicht vollständig gelöst wird, kann sich die Frontklappe 1 nicht unkontrolliert von der Karosserie 3 lösen, und ihr Hub ist begrenzt.

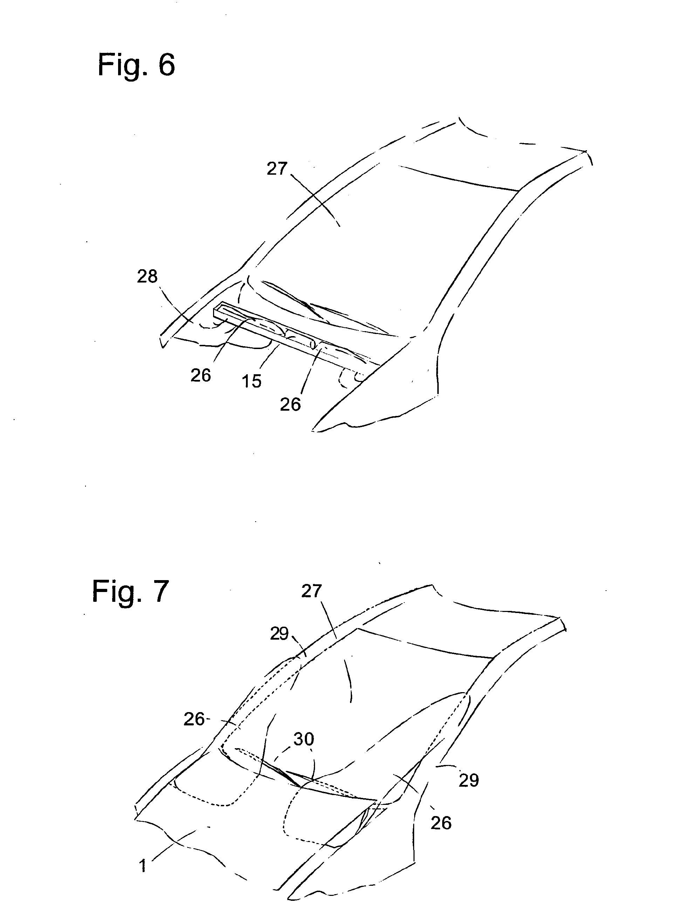

Einer bevorzugten Ausgestaltung zufolge ist der in Fig. 5 als Zylinder dargestellte erste Aktuator 7 realisiert durch einen Airbag, der unterhalb der Frontklappe 1 zwischen dieser und festen Teilen der Karosserie untergebracht ist. Fig. 6 zeigt eine perspektivische Teilansicht eines Kraftfahrzeugs bei entfernter Frontklappe, die eine solche Anordnung veranschaulicht. Am Fuß der Frontscheibe 27 des Fahrzeugs erstreckt sich ein U-Träger 28 quer durch den Motorraum. Bei diesem U-Träger 28 kann es sich um einen tragenden Bestandteil der Karosserie 3 handeln, der eine entsprechende Stabilität aufweist.

In dem nach oben offenen Kanal des U-Trägers 28 ist in der Mitte der Gasgenerator 15 untergebracht, rechts und links von ihm befinden sich zwei Airbags 26, die von dem Gasgenerator 15 jeweils über einen (in der Figur nicht gezeigten) zwischengeschalteten zweiten Aktuator 8 vom Fig. 4 gezeigten Typ gespeist werden. Der Aktuator 8 dient, wie mit Bezug auf Fig. 5 beschrieben, zur Entriegelung des Scharniers 2.

Fig. 7 zeigt die gleiche Teilansicht, allerdings mit in einer Unfallsituation angehobener Frontklappe 1. Nachdem der Gasgenerator 15 gezündet worden ist und zunächst mit Hilfe des zweiten Aktuators 7 das Scharnier 2 entriegelt worden ist, werden die Airbags 26 mit Gas vom Gasgenerator 15 gespeist. Die Airbags entfalten sich und heben dabei zunächst den rückwärtigen Bereich der Frontklappe 1 an, um anschließend durch den dabei entstehenden Spalt zwischen dem rückwärtigen Rand der Frontklappe 1 und der Karosserie auszutreten und sich über die Wellen der Scheibenwischer 30, die A-Säulen 29 beiderseits der Frontscheibe 27 und wenigstens einem Teil der Frontscheibe 27 auszubreiten.

### Bezugszeichenliste

- 1: Frontklappe
- 2: Scharnier
- 3: Karosserie
- 4: Lasche
- 5: Lasche
- 6: Stift
- 7: 1. Aktuator
- 8: 2. Aktuator
- 9: Zylinder
- 10: Kolben
- 11: Kammer
- 12: Kammer
- 13: Kolbenstange
- 14: Seil
- 15: Gasgenerator
- 16: Stirnwand
- 17: Druckausgleichsöffnung
- 18: Ausgangsanschluss
- 19: -
- 20: Leiste
- 21: Stift
- 22: Stift
- 23: Gelenkarm
- 24: Gelenkarm
- 25: Kolbenstange
- 26: Airbag
- 27: Frontscheibe
- 28: U-Träger
- 29: A-Säulen
- 30: Scheibenwischer
- 31: Kotflügel

## Patentansprüche

1. Frontklappenanordnung, insbesondere für ein Kraftfahrzeug mit einer Frontklappe (1), wenigstens einem ersten Aktuator (7, 26), zum Anheben der Frontklappe (1) bei einem Unfall, einem Scharnier (2), das die Frontklappe (1) mit der Karosserie (3) des Fahrzeugs verbindet, einem oder mehreren im Bereich der Frontklappe (1) wirksamen Airbags (26) und einem Gasgenerator (15) zum Versorgen wenigstens eines dieser Airbags (26), **dadurch gekennzeichnet, dass** ein zweiter Aktuator (8) zum Lösen der über das Scharnier (2) verlaufenden Verbindung zwischen der Frontklappe (1) und der Karosserie (3) an den Gasgenerator (15) angeschlossen ist.

2. Frontklappenanordnung nach Anspruch 1, **dadurch gekennzeichnet, dass** die durch den zweiten Aktuator (8) lösbare Verbindung eine Verbindung zwischen zwei gegeneinander schwenkbaren Teilen (4, 5) des Scharniers (2) ist.

3. Frontklappenanordnung nach einem der vorhergehenden Ansprüche, **dadurch gekennzeichnet, dass** der zweite Aktuator (8) mit einem Gelenk (6) des Scharniers (2) wirkverbunden ist.

4. Frontklappenanordnung nach Anspruch 1, **dadurch gekennzeichnet, dass** die durch den zweiten Aktuator (8) lösbare Verbindung eine Verbindung zwischen dem Scharnier (2) und der Karosserie (3) oder dem Scharnier (2) und der Frontklappe (1) ist.

5. Frontklappenanordnung nach Anspruch 4, **dadurch gekennzeichnet, dass** das Scharnier (2) an wenigstens zwei Punkten (21, 22) mit der Karosserie (3) oder mit der Frontklappe (1) verbunden ist und der zweite Aktuator (8) ausgelegt ist, eine der zwei Verbindungen (22) zu lösen.

6. Frontklappenanordnung nach einem der vorhergehenden Ansprüche, **dadurch gekennzeichnet, dass** der erste Aktuator (7) einer der Airbags (26), insbesondere der wenigstens eine von dem einen Gasgenerator (15) versorgte Airbag (26) ist.

7. Frontklappenanordnung nach einem der vorhergehenden Ansprüche, **dadurch gekennzeichnet, dass** der zweite Aktuator (8) einen in einer Gasleitung zwischen dem Gasgenerator (15) und dem wenigstens'einen von ihm versorgten Airbag (26) angeordneten Zylinder (9) mit einem Kolben (10) umfasst, der mit der Verbindung des Scharniers (2) wirkverbunden ist und durch das Gas des Gasgenerators (15) aus einer Ruhestellung, in der er die Gasleitung versperrt und die Verbindung besteht, in eine aktive Stellung verdrängbar ist, in der er die Gasleitung freigibt und die Verbindung gelöst ist.

8. Frontklappenanordnung nach Anspruch 7, **dadurch gekennzeichnet, dass** an einer vom Gaseinlass abgewandten Seite (16) des Zylinders (9) eine Druckausgleichsöffnung (17) vorhanden ist.

9. Frontklappenanordnung nach einem der vorhergehenden Ansprüche, **dadurch gekennzeichnet, dass** der wenigstens einer der Airbags (26) im aktivierten Zustand eine Frontscheibe (27), Scheibenwischerwellen und/oder A-Säulen (29) des Kraftfahrzeugs überdeckt.

10. Frontklappenanordnung nach einem der vorhergehenden Ansprüche, **dadurch gekennzeichnet, dass** der wenigstens eine Airbag (26) im nicht aktivierten Zustand von einer nach oben offenen Schale (28) aufgenommen ist.

11. Frontklappenanordnung nach Anspruch 10, **dadurch gekennzeichnet, dass** die Schale als U-Profil (28) ausgebildet ist.
